(19) Europäisches Patentamt
European Patent Office
Office européen des brevets

(11) **EP 1 860 608 A1**

(12) **EUROPÄISCHE PATENTANMELDUNG**
veröffentlicht nach Art. 158 Abs. 3 EPÜ

(43) Veröffentlichungstag:
**28.11.2007 Patentblatt 2007/48**

(21) Anmeldenummer: **05790007.8**

(22) Anmeldetag: **08.06.2005**

(51) Int Cl.:
*G06Q 40/00* (2006.01)   *G06T 1/00* (2006.01)

(86) Internationale Anmeldenummer:
**PCT/RU2005/000317**

(87) Internationale Veröffentlichungsnummer:
**WO 2006/098654 (21.09.2006 Gazette 2006/38)**

(30) Priorität: **15.03.2005 RU 2005107196**

(71) Anmelder: **Global Enerdzhi Invest Company S.A.**
**2163 Luxembourg (LU)**

(72) Erfinder: **SHMAKOV, Andrey Vyacheslavovich**
**Moscow, 111020 (RU)**

(74) Vertreter: **Kietzmann, Manfred**
**Kietzmann, Vosseberg, Röhnicke,**
**Patentanwälte-Rechtsanwalt-Partnerschaft,**
**Friedrichstrasse 95**
**IHZ P.O. Box 4**
**10117 Berlin (DE)**

(54) **SYSTEM ZUM ANZEIGEN VON ERGEBNISSEN VON KÄUFEN/VERKÄUFEN VON AKTIENINVESTITIONS-FOND-ANTEILEN AN EINER BÖRSE**

(57)     Die Erfindung betrifft die Eingabe, Verarbeitung und Darstellung von Börsendaten im Handel von Investmentanteilen mittels eines Computersystems. Beschrieben wird ein System zur Darstellung von Ergebnissen des Ankaufs/Verkaufs von Investmentfondsanteilen, bestehend aus einem mit der entsprechenden Software ausgestatteten Rechner, der mit einer Einrichtung zur Darstellung von Text- und Bildinformationen sowie mit einem oder mehreren Eingabegeräten über Datenübertragungskanäle verbunden ist, wobei die Einrichtung zur Darstellung von Text- und Bildinformationen ein Bildschirm oder ein Ticker ("laufende Zeile") ist und der Rechner über die Funktionen des Empfangs von Informationen von den Eingabegeräten und des Speicherns von Informationen über die Anzahl der Anteile, aus welchen jeder an dem Börsenhandel beteiligte Investmentfonds besteht, über das Restguthaben auf den Handelskonten und über die Anzahl von Wertpapieren im Eigentum eines jeden Investmentfonds in einer Datenbank verfügt, sowie die Funktion der durch die Software ausgeführten Ermittlung des aktuellen Zeitwertes eines Anteils und der Darstellung des Preises dieses Anteils für jeden Investmentfonds in Ziffern auf dem Bildschirm oder im Ticker in Form eines Preisindexes.

Fig. 1

EP 1 860 608 A1

**Beschreibung**

**Gebiet der Technik**

Die Erfindung ist Bestandteil der Systeme und Verfahren zur Berechnung und Datenverarbeitung bei spezifischen Kredit- und Finanzoperationen beim Umsatz von Anteilen an Wertpapieren.

**Stand der Technik**

Es ist ein Darstellungssystem der Ergebnisse des Ankaufs/Verkaufs der Anteile von Investmentfonds (im weiteren AIF) an der Börse bekannt, das aus einem Rechner, ausgerüstet mit entsprechender Software besteht, und das über Verbindungskanäle mit einer Einrichtung zur Darstellung von Text- und Bildinformationen und einer Einrichtung zur Informationseingabe verbunden ist (RU N° 2187149, G06F17/60).

Als Nachteil dieses Systems, das als Werkzeug bei der Abwicklung der Anteils-Geschäfte auf der Fondsbörse verwendet wird, gilt der in Bezug auf die Information und die Glaubwürdigkeit verwendete Berechnungsalgorithmus der Anteilskosten. Die Information über den Aktivabestand der AIF wird aus dem Clearingzentrum entnommen in der Qualität, wie sie von der Deposit- und Clearinggesellschaft veröffentlicht werden. Die Information über das Restguthaben auf den Handelsrechnungen kommt aus der Abrechnungszentrale. Die Angaben über die Preise der letzten Geschäfte kommen aus den Handelsservern der Fondsbörse.

Die Information über die Anzahl der Anteile und Reste auf dem Girokonto der AIF wird aufbereitet von der Verwaltungsgesellschaft auf der Grundlage der von den Banken auf den aufgemachten Konten vorgelegten Angaben und vom Fachdepositar, der die Änderungen der Anteile bei ihrer Beschaffung oder Löschung seitens der Anteileinhaber berücksichtigt. Diese Information wird einmal täglich vor dem Beginn des Handels an der Fondsbörse übermittelt und bleibt im Laufe des Handelstages unverändert.

Die Verwaltungsgesellschaften haben die Anteile bei den Anteileinhabern nur nach dem Preis zu beschaffen und zu löschen, der nach folgender Methodik der Anteileberechnung berechnet wird: der eingehende Rest der Wertpapiere wird am Anfang des Tages auf den mittleren Preis des Tagesergebnisses umgerechnet. Danach wird die Summe aller Aktiva auf die Anzahl der Anteile aufgeteilt.

Daraus ergibt sich, dass die Geschäfte mit den Anteilen durch die Verwaltungsgesellschaft nur nach den Preisen des vorausgegangenen Tages abgewickelt werden können, die heute, also einen Tag danach, von der Realität weit entfernt sein können.

Bis auf den heutigen Tag ist ein wesentlicher Faktor, der den aktiven Börsenhandel mit AIF behindert, das Fehlen von glaubwürdigen und operativen Information über den Wert von AIF-Vermögen aufgeschlüsselt auf jeden Anteil. Nur bei Vorhandensein einer solchen Information könnten die professionellen Teilnehmer die beiderseitigen Kontierungen der Investmentanteile abschätzen und die Investoren die Geschäfte mit AIF an der Börse abschließen. Die Struktur des Bestandes von AIF und die Operationen mit seinen Aktiva erscheinen als geschlossene Information, weswegen es kaum möglich ist, für die anderen Teilnehmer des Marktes festzustellen, was mit den Kosten der Anteile im Falle des Zuwachses oder der Abnahme der Kontierungen bei unterschiedlichen Aktionen geschieht.

Es ist offensichtlich, dass bei den bestehenden normativen Dokumenten der regulierenden Organe Anteileinhaber beim Ankauf oder Verkauf der Anteile durch die Verwaltungsgesellschaft unbegründete Vorteile oder Verluste gegenüber anderen Anteileinhabern erzielen können, da der Preis nach der oben erwähnten Methodik festgelegt wird. Das erklärt das Vorhandensein der großen Aufpreise bei der Beschaffung der Anteile und der Preisnachlässe beim Verkauf, so dass Personen, die über Insiderinformation über den realen Preis der Anteile verfügen, keinen ungerechtfertigten Profit erzielen können. Darüberhinaus bietet selbst die Prozedur der Beschaffung und Tilgung der Anteile den Anteileinhabern keine Möglichkeit, die aktiven Operationen mit den Anteilen zu beeinflussen. Nach der Gesetzgebung kann die Verwaltungsgesellschaft den Preis der Anteiletilgung im Verlaufe von 3 Tagen nach Erhalt der Meldung über die Tilgung festsetzen und dann noch bis zu 15 Tagen die Rückgabe des Geldes aussetzen.

Die Art der Durchführung der Operationen mit Investmentanteilen durch die Börse kann grundlegend die Attraktivität der Anlage Investmentfonds verbessern. Alles was man dazu braucht, ist die Ermittlung des Preises für jeden Anteil in einem realen Zeitregime. Falls das Vermögen der AIF nur aus finanziellen Börseninstrumenten besteht, kann man seinen Wert immer von den Preisen der letzten Geschäfte an der Börse abhängig machen. Und da im Laufe des Tages die Anzahl der Anteile unverändert bleibt, kann man die Einschätzung des Vermögenswertes der AIF für jeden Anteil leicht ermitteln.

**Wesen der Erfindung**

Die vorliegende Erfindung ist auf die Lösung der technischen Aufgabe der Eingabe des entsprechenden Algorithmus in das Darstellungssystem der Handelsergebnisse an der Börse zur Bestimmung des Preises für jeden Anteil in einem realen Zeitregime gerichtet.

Das dabei erzielte technische Ergebnis besteht in der Zunahme der Information und der Glaubwürdigkeit der Resultate des Handels durch eine Kostendarstellung in Form der Ergebnisse jedes Geschäftes anhand der realen Größe des Anteilepreises.

Das angegebene technische Ergebnis wird erzielt mit einem System zur Darstellung von Ergebnissen des Ankaufs/Verkaufs von Investmentfondsanteilen an der Börse, bestehend aus einem mit der entsprechenden Software ausgestatteten Rechner, der mit einer Einrichtung zur Darstellung von Text- und Bildinformationen sowie mit einem oder mehreren Eingabegeräten über Datenübertragungskanäle verbunden ist, wobei eine Besonderheit darin besteht, dass die Einrichtung zur Darstellung von Text- und Bildinformationen ein Bildschirm oder ein Ticker ("laufende Zeile") ist und der Rechner über die Funktionen des Empfangs von Informationen von den Eingabegeräten und des Speicherns von Informationen über die Anzahl der Anteile, aus welchen jeder an dem Börsenhandel beteiligte Investmentfonds besteht, über das Restguthaben auf den Handelskonten und über die Anzahl von Wertpapieren im Eigentum eines jeden Investmentfonds in einer Datenbank verfügt, sowie die Funktion der durch die Software ausgeführten Ermittlung des aktuellen Zeitwertes eines Anteils und der Darstellung des Preises dieses Anteils für jeden Investmentfonds in Ziffern auf dem Bildschirm oder im Ticker in Form eines Preisindexes, wobei der Preisindex ermittelt wird durch Dividieren der Anzahl von Wertpapieren im Eigentum eines Investmentfonds durch den Handelspreis dieser Wertpapiere zuzüglich der Restguthaben auf den Handels- und Rechnungskonten des jeweiligen Investmentfonds durch die Anzahl der Anteile dieses Fonds.

**Kurze Beschreibung der Zeichnung und Ausführungsbeispiel**

Die vorliegende Erfindung wird anhand eines konkreten Beispiels erklärt, ist aber nicht darauf beschränkt, und zeigt anschaulich die Möglichkeit der Erzielung des erforderlichen technischen Ergebnisses mit Hilfe der angeführten Gesamtheit der Merkmale.

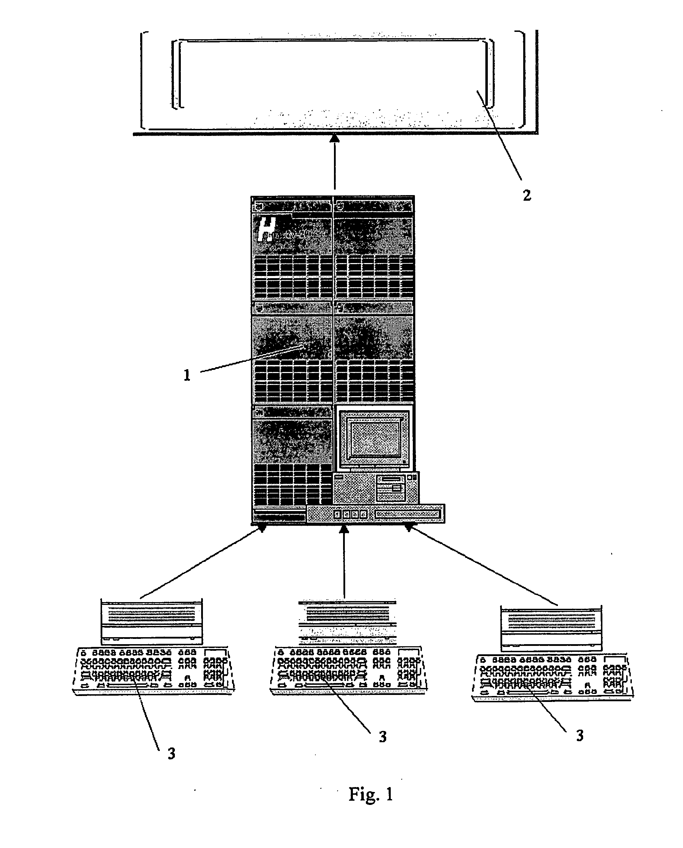

**Fig. 1** zeigt ein Block-Schema des Darstellungssystems der Ergebnisse des Ankaufs/Verkaufs der Anteile der Investmentfonds an der Börse. Entsprechend der vorliegenden Erfindung schließt das Darstellungssystem der Ergebnisse des Ankaufs/Verkaufs der Anteile von Investmentfonds ein den Rechner 1 (Prozessorblock), verbunden über Kanäle mit der Einrichtung 2 zur Darstellung der textlichen und graphischen Information und mit Eingabegeräten 3 zur Informationseingabe. Die Einrichtung 2 zur Darstellung der textlichen und graphischen Information arbeitet mit Displayanzeigen oder einem Ticker (Darstellung laufender Zeilen).

Der Rechner 1, die Einrichtung 2 zur Darstellung der textlichen und graphischen Information und die Eingabegeräte 3 zur Informationseingabe stellen bekannte Komponenten eines beliebigen Computersystems dar.

Der Rechner 1 ist mit entsprechender Software ausgerüstet.

Der Rechner 1 ist mit der Funktion der Informationsspeicherung auf der Grundlage eingegebener Daten über die Anzahl der Anteile, aus denen jeder am Handel an der Börse beteiligte anteilige Fonds besteht, über die Resteguthaben auf den Rechnungskonten, über Restguthaben der Handelskonten und der Anzahl der Wertpapiere, aus denen das Vermögens jedes erwähnten Fonds besteht, informiert. Diese Informationen werden über die Eingabegeräte 3 der Informationseingabe eingegeben.

Der Rechner 1 ist auch mit der Funktion der Ermittlung des Anteilpreises im realen Zeitregimes (aktueller Zeitwert) und der Darstellung des Ziffernäquivalentes des Anteilepreises für jeden Investmentfonds auf dem Display oder im Ticker in Form des Preisindexes des Anteiles versehen, wobei der Preisindex berechnet wird durch Dividieren der Anzahl von Wertpapieren im Eigentum eines Investmentfonds durch den Handelspreis dieser Wertpapiere zuzüglich der Restguthaben auf den Handels- und Rechnungskonten des jeweiligen Investmentfonds durch die Anzahl der Anteile dieses Fonds.

Der mögliche Funktionsalgorithmus der Berechnung des Anteilepreises sieht folgendermaßen aus:

1. Bis zum Beginn des Handels kommt auf die Fondsbörse von der Verwaltungsgesellschaft die Information in folgender Form :

a) Auszüge über die Anzahl der Anteile aus denen der Fonds besteht;
b) Auszüge über die Reste auf den Rechnungskonten der AIF. Diese Angaben ändern sich im Laufe des Tages nicht. Alle Änderungen in der Anzahl der Anteile im Falle der Tilgung oder des Verkaufs erfolgen nach dem Abschluss des Handels.

2. Die Börse verfügt über die Information über die Anzahl der Wertpapiere und Restguthaben auf den Handelskonten, aus denen das Vermögen des Fonds aktuell besteht.

3. Als den Berechnungspreis, nach welchem sich der Preis der Wertpapiere bestimmt, wird der Preis des letzten Geschäfts genommen. Falls im Laufe des Tages über das Wertpapier kein Geschäft abgewickelt wurde, wird der Preis des Abschlusses des vorherigen Tages verwendet.

4. Die Festlegung der bereinigten Aktiva der AIF ergibt sich aus der Summe der Anzahl der Wertpapiere für den berechneten Preis plus der Restguthaben auf den Handels- und Rechnungskonten.

5. Das Vermögenswert der AIF für jeden Teil wird durch die Division der bereinigten Aktiva durch die Anzahl der Anteile berechnet.

Die Erneuerung der Information erfolgt im Falle der Geschäfteabwicklung mit Aktiva des Fonds oder der Preisänderung des letzten Geschäftes mit Wertpapieren, die das Investitionsportfolio der AIF ausmachen. Dieser Wert in Form des Preisindexes des Anteiles wird auf der Börse mit solchen Verfahren wie der Börsenindexe gezeigt.

Der Index des Preises (der Kosten) des Anteiles $I_t$ für die berechnete Zeit wird als das Verhältnis des gesamten Marktwertes $S_t$ der bereinigten Aktiva der AIF auf die laufende Zeit zur Anzahl der Anteile $N_t$: $I_t=S_t/N_t$ ausgewiesen, wobei

$$S_t = \sum_{i=0}^{N} P_i * Q_i + M_b + M_r$$

$Q_i$ - die Anzahl der Wertpapiere der i-Bezeichnungen von AIF bezogen auf den aktuellen Zeitpunkt;
$P_i$ - Preis des i-Wertpapieres auf die berechnete Zeit;
$M_b$ - Restguthaben der AIF auf dem Handelskonto im Handelssystem der Fondsbörse;
$M_r$ - Summe der Restguthaben der AIF auf seinen Rechnungskonten, korrigiert um die Größe der Debitoren- und Kreditorensalden;
N - die Anzahl der Bezeichnungen der Wertpapiere im Investmentportfolio der AIF.

Falls im Laufe der Handelssitzung Geschäfte die Wertpapiere betreffend abgewickelt werden, wird als $P_i$ für das i Wertpapier der Preis des letzten Geschäftes genommen, und falls betreffend die Wertpapiere im Laufe der laufenden Sitzung keine Geschäfte abgewickelt werden, dann wird als $P_i$ für das i Wertpapier der Preis des vorherigen Tages genommen.

Der Markt von Gruppeninvestitionen zeigt in den letzten Jahren eine hohe Dynamik des Wachstums, aber die Anteileinhaber hatten die Möglichkeit der Information über den Wert der bereinigten Aktiva und des Anteiles nur nach dem Abschluss der Handelssitzung. Die vorliegende Erfindung erlaubt die Preisbildung der Anteile transparenter zu machen: der Indikator des Anteilwertes erlaubt den Investoren im Laufe des Handelstages seine Dynamik zu verfolgen und operativ Entscheidungen über den Verkauf oder den Ankauf der Anteile zu treffen. Die Berechnung eines solchen Indikators wird zur Popularisierung und dem Wachstum der Liquidität des Marktes für diese Form der Geldanlage beitragen.

**Industrielle Verwendbarkeit**

Diese Erfindung ist industriell verwendbar, da sie unter Nutzung der weitverbreiteten Computersysteme und entsprechender Software realisiert werden kann. Sie erlaubt, die eingegebenen Angaben entsprechend dem vorgeschlagenen Algorithmus, der in der Beschreibung und im Anspruch dargelegt wurde, zu verwenden.

**Patentansprüche**

1. System zur Darstellung von Ergebnissen des Ankaufs/Verkaufs von Investmentfondsanteilen an der Börse, bestehend aus einem mit der entsprechenden Software ausgestatteten Rechner, der mit einer Einrichtung zur Darstellung von Text- und Bildinformationen sowie mit einem oder mehreren Eingabegeräten über Datenübertragungskanäle verbunden ist, wobei eine Besonderheit darin besteht, dass die Einrichtung zur Darstellung von Text- und Bildinformationen ein Bildschirm oder ein Ticker ("laufende Zeile") ist und der Rechner über die Funktionen des Empfangs von Informationen von den Eingabegeräten und des Speicherns von Informationen über die Anzahl der Anteile, aus welchen jeder an dem Börsenhandel beteiligte Investmentfonds besteht, über das Restguthaben auf den Handelskonten und über die Anzahl von Wertpapieren im Eigentum eines jeden Investmentfonds in einer Datenbank verfügt, sowie die Funktion der durch die Software ausgeführten Ermittlung des aktuellen Zeitwertes eines Anteils und der Darstellung des Preises dieses Anteils für jeden Investmentfonds in Ziffern auf dem Bildschirm oder im Ticker in Form eines Preisindexes, wobei der Preisindex ermittelt wird durch Dividieren der Anzahl von Wertpapieren im Eigentum eines Investmentfonds durch den Handelspreis dieser Wertpapiere zuzüglich der Restguthaben auf den Handels- und Rechnungskonten des jeweiligen Investmentfonds durch die Anzahl der Anteile dieses Fonds.

Fig. 1

<table>
<tr><td colspan="2">**INTERNATIONAL SEARCH REPORT**</td><td>International application No.<br>PCT/RU 2005/000317</td></tr>
</table>

| A. CLASSIFICATION OF SUBJECT MATTER | *G06Q 40/00 (2006.01)*<br>*G06T 1/00 (2006.01)* |
|---|---|

According to International Patent Classification (IPC) or to both national classification and IPC

**B. FIELDS SEARCHED**

Minimum documentation searched (classification system followed by classification symbols)

    G06F 17/00-17/60, 19/00, G06T 1/00, G06F 15/16

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | RU 2191428 C2 (CITYBANK AKTSIENGEZELLSHAFT) 20.10.2002, claim, figures 1, 6, columns 6, 9, 14 | 1 |
| X | RU 226714 C2 (SMIRNOV SERGEI NIKOLAEVICH) 10.04.2004, columns 45-50 | 1 |
| A | WO 1998/026363 A1 (CANTOR FITZERALD SECURITIES) 18.06.1998 | 1 |
| A | US 6418417 B1 (STRATEGIC WEATHER SERVICES) 09.07.2002 | 1 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 November 2005 (28.11.2005) | 01 December 2005 (01.12.2005) |

| Name and mailing address of the ISA/ | Authorized officer |
|---|---|
| Facsimile No. | Telephone No. |

Form PCT/ISA/210 (second sheet) (July 1998)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2187149